# EUROPEAN PATENT APPLICATION

(11) **EP 1 430 786 A1**
(43) Date of publication of application: **23.06.2004**
(21) Application number: 01965286.6
(22) Date of filing: 28.08.2001
(51) Int. Cl.: A23K 1/10, A23K 1/18, A23L 1/312

(54) **MEAT PRODUCT FOR FEEDING ANIMALS**

(71) Applicant: MCDOG Pet-Products, S.L., 28947 Fuenlabrada (ES)
(72) Inventor: MACERI, Cosimo, E-28042 Madrid (ES); HAUF, Reiner, E-28006 Madrid (ES)
(74) Representative: Ungria Lopez, Javier
(86) International application number: PCT/ES2001/000331
(87) International publication number: WO 2003/017779

(57) **Abstract**

The present invention relates to a meat product for animal feed characterised in that it comprises minced pig ear as sole component or in combination with other components. In a preferred manner this meat product is foreseen for its use in cased form, as a treat and in a particular way for dogs.

## Description

### TECHNICAL FIELD

The present invention relates to the field of animal feed.

### STATE OF THE ART

The animal feed sector has developed spectacularly in recent years. Products intended for feeding domestic animals are increasingly carefully produced from the point of view of the quality of their components, as well as the type of individual components they include, care also being taken of aspects that are of importance from the point of view of toxicity, environmental hazard, and from the economic point of view. Among these aspects are the possibility of recovering raw materials proceeding from products that have been partially used for other purposes.

Furthermore, the products intended to be a complete animal feed, products are likewise evolving intended for use as a treat or reward for animals, since treats, for example in the case of dogs are of great importance in many aspects such as when carrying out' teaching or training tasks.

Among some of the products used up to now as treats for animals, and in particular for dogs is pig ear, which is used simply in dehydrated or dried form.

Some products used as treats for dogs are described for example in the British patent GB-927054, wherein products are described which contain flour, meat substitute, cheese, etc.

However an appropriate product does not exist in the state of the art as a treat for animals, and in particular, for dogs, prepared on a basis of a raw material such as minced pig ear, which improves the properties of existing products with regard to the quality/price ratio, and which allows benefit to be obtained from the pig ear trimmings that arise in slaughterhouses and in the transformer industries that use this product.

### BRIEF DESCRIPTION OF THE INVENTION

The present invention relates to a meat product for animal feed characterised in that it comprises minced pig ear as sole components or in combination with other components. In a preferred manner this meat product is foreseen for its use in sausage form, as a treat and in a particular way for dogs.

### DESCRIPTION OF THE INVENTION

The present invention relates to a meat product for animal feed characterised in that it comprises minced pig ear as sole component or in combination with other components.

Said minced pig ear can be present when it is mixed with other components in an amount preferably between 0.001% by weight and 99.999% by weight. In a still more preferred way it is present in an amount between 50% by weight and 70% by weight. The meat product of the present invention can also comprise meat of, at least, another animal species, being present in an amount between 15 and 50% by weight.

In a preferred way said meat of another animal species is poultry meat.

The present meat product can also include in its composition one or more species of cereals, for example maize, wheat, rice. The cereal or cereals can also be present in an amount between 2% and 20% by weight. In a still more preferred way said cereal is ground rice.

The composition of the present meat product can also comprise at least an additive which can be selected among flavouring agents, colouring agents, aromas, stabilizers and any other nutrient like vitamins, minerals, etc., necessary, and appropriate for animal feed.

This additive can be present in an amount between 0,001% and 20% by weight. Among the additives employed mention can be made of spices like salt, paprika, etc. Among the additives used as stabilizers, sorbic acid is specially preferred, for inhibiting the formation of mould. The appropriate quantity of sorbic acid is approximately 3 g of sorbic acid for each kg of meat product.

Among the minerals Mn, Zn, Ca, Fe, Cu, etc. can be adequate.

The meat product of the present invention has a shape selected between a moulded meat product and a meat product stuffed in casings. Preferably it is presented as raw sausage, dried with natural curing, and in a preferred way as sausages of variable length and diameter.

The basic component of the meat product of the present invention is as has been previously mentioned minced pig ear, and preferably said pig ear is in combination with other components. The pig ear in a preferable way comes from the butchering of said animals and moreover it is clean, in a perfectly conserved state and free of any foreign body. Said pig ear comes from slaughterhouses and approved butchering rooms.

In similar manner, when in the composition of the product meat of other animal species is included, said meat is clean, in a perfectly conserved state and free of any foreign body, coming from slaughterhouses and approved butchering rooms.

In a preferred embodiment of the product of the present invention, poultry meat is also used, which consists of meat obtained by mechanical separation from poultry carcasses proceeding from healthy animals, free of feathers, viscera, additives, hormones and any foreign body, and which also contains calcium in a proportion greater than 0.20% by weight.

The aforementioned raw materials comply with the quality requirements established in the standard ISO9002.

In a specially preferred embodiment, the meat product of the present invention has the following composition:
- pig ear: in an amount of 60% by weight
- lean mechanically boned poultry ("MDM Ave" of Alimundo, S.L.): in an amount of 30% by weight
- salt: in an amount of 1.50% by weight
- ground paprika and sorbic acid: in an amount of 3.00% by weight, and
- ground rice: in an amount of 6.50% by weight.

The present invention also refers to a process for obtaining the described meat product, which comprises:
- a first stage of cooking the pig ear and the rest of the components of meat type, where proceeding, in which a cooked product is obtained,
- a second stage of mincing, in which said cooked product is minced, a minced product being obtained,
- a third stage of kneading, in which said minced product is mixed and kneaded with the rest of components, a kneaded product being obtained,
- a fourth stage selected between
   o a fourth stage of kneading, in which the mixed product is moulded, a moulded product being obtained and
   o a fourth stage of casing, in which the kneaded product is stuffed in casings, a cased product being obtained and
- a fifth drying stage, in which said cased product is dried, a dried meat product being obtained.

The first stage of cooking is carried out by cooking in water during a period of between 2 and 6 minutes, preferably of 3 minutes, at the temperature of boiling water to eliminate the microbial load coming from the butchering operations and so that the internal proteins are uncoagulated.

The second stage is carried out in a preferred manner in a mincing machine immediately after the first cooking stage. In a preferred manner a machine is used fitted with a fine plate, that is, with a tube of 3.5 mm in diameter (plate hole diameter).

The third stage of kneading is carried out by thoroughly mixing the minced meat or meats with the rest of the components, such as additives, etc., always maintaining the refrigeration temperature not greater than 8° C.

The fourth stage of casing is carried out in a preferred manner in an automatic machine, and in a particular manner in "Fibran" type sausage casing - suitable for human consumption -, of calibre 22 mm, uncooked. In a preferred manner the cased product is presented in the form of sausages of 10 cm in length.

The fifth drying stage is carried out preferably in an automatic drier or tunnel with controlled temperature and humidity, until the desired temperature and texture are achieved.

Another object of the present invention is the use of the present meat product for animal feed. A specially preferred use is as a treat, and in particular as a treat for dogs.

The following example illustrates some aspects of the present invention, but it should not be considered as restrictive of the scope thereof.

### EXAMPLE

600 g of pig ear and 30 g of poultry meat ("MDM"), both components clean and free of foreign bodies, coming from an approved slaughterhouse and complying with the quality requirements set out in the standard ISO9002, are cooked in water at 100° C during 3 minutes to inhibit contamination. Next the mixture of both cooked components is minced in a machine with a fine plate, of 3 mm hole diameter. Salt is added to the mixture in an amount of 1.50 g, and 3 g of paprika, as well as 6.5 g of ground rice, and it is mixed and kneaned until a paste is obtained. During the kneading the temperature is kept below 8° C. The kneaded product obtained is stuffed in casing using for this "Fibran" type casing of calibre 22 mm, sausages being obtained of 10 cm in length which are dried in an automatic tunnel with control of the temperature between 25° C and 30° C and the humidity between 60% and 70%. Said sausages so obtained are ready for consumption.

## Claims

1. A meat product for mammals feed, **characterised in that** it comprises minced pig ear as sole component or in combination with other components.

2. Meat product according to claim 1, **characterised in that** the minced pig ear is present in an amount of between 0.001% by weight and 99.999% by weight.

3. Meat product according to claim 1, **characterised in that** the minced pig ear meat is present in an amount of between 50% by weight and 70% by weight.

4. Meat product according to claim 1, **characterised in that** it comprises meat of at least another animal species.

5. Meat product according to claim 4, **characterised in that** said meat of another animal species is present in an amount between 15 and 50%.

6. Meat product according to claim 4 or 5, **characterised in that** said meat of another animal species is poultry meat.

7. Meat product according to any one of the previous claims, **characterised in that** it comprises an amount of one or more species of cereals.

8. Meat product according to claim 7, **characterised in that** said one or more species of cereal is present in an amount of between 2% and 20% by weight.

9. Meat product according to claim 7 or 8, **characterised in that** said cereal is rice.

10. Meat product according to any one of the previous claims, **characterised in that** it comprises at least one additive.

11. Meat product according to claim 10, **characterised in that** said additive is selected among flavouring agents, colouring agents, aromas, stabilisers, vitamins and minerals.

12. Meat product according to claim 10, **characterised in that** said additive is present in an amount of between 0.001% and 20%.

13. Meat product according to any one of the previous claims, **characterised in that** said meat product is in a shape selected between a moulded meat product and a cased meat product.

14. Meat product according to claim 1 or 13, **characterised in that** said meat product is in the form of cased dried raw meat.

15. Meat product according to the previous claims, **characterised in that** said product is in the form of sausages.

16. Process for obtaining a meat product according to any one of the previous claims, **characterised in that** it comprises:
- a first stage of cooking the pig ear and the rest of the meat type components in the event that the pig ear is not the sole component of meat type, wherein a cooked product is obtained,
- a second stage of mincing, wherein said cooked product is minced, a minced product being obtained,
- a third stage of kneading, in which said minced product is mixed and kneaded with the rest of components, a kneaded product being obtained,
- a fourth stage selected among
- a fourth moulding stage, in which the kneaded product is moulded, a moulded product being obtained
and
- a fourth stage of casing, in which the kneaded product is cased, an cased product being obtained
and
- a fifth drying stage, in which said cased product is dried, a dried meat product being obtained.

17. Process according to claim 16, **characterised in that** the first stage of cooking is carried out by cooking in water during a period of between 2 and 6 minutes, at a temperature of 100° C.

18. Process according to claim 16, **characterised in that** the second mincing stage is carried out in a mincing machine which machine is fitted with a fine plate, immediately after the first cooking stage.

19. Process according to claim 16, **characterised in that** the third stage of kneading is carried out always maintaining the refrigeration temperature not higher than 8° C.

20. Process according to claim 16, **characterised in that** the fourth stage is a stage of casing and is carried out in an automatic machine.

21. Process according to claim 16, **characterised in that** the fifth drying stage is carried out in an automatic drier or tunnel at controlled temperature and humidity, until the desired temperature and texture are obtained.

22. Use of the meat product according to any one of claims 1 to 15, as a treat for mammals.

23. Use of the meat product according to any one of claims 1 to 15, or 22, as a treat for dogs.
